# EUROPEAN PATENT SPECIFICATION

(11) **EP 3 573 889 B1**
(45) Date of publication and mention of the grant of the patent: **09.06.2021**
(21) Application number: 18737432.7
(22) Date of filing: 28.04.2018
(51) Int. Cl.: B64C 11/00, B64C 7/02, B64C 39/00, B64C 29/00, B64C 9/38, B64C 39/02

(54) **AERODYNAMIC APPARATUS**
AERODYNAMISCHE VORRICHTUNG
APPAREIL AÉRODYNAMIQUE

(30) Priority: 11.10.2017 KZ 20170887
(43) Date of publication of application: 04.12.2019
(73) Proprietor: Akhmejanov, Alibi, Uralsk City 090007 (KZ)
(72) Inventor: AKHMEJANOV, Alibi, Uralsk city 090007 (KZ)
(74) Representative: Jeck, Anton
(86) International application number: PCT/KZ2018/000008
(87) International publication number: WO 2019/074349

(56) References cited:
- EP-A1- 3 077 282
- EP-A2- 2 658 776
- DE-A1-102007 004 746
- US-A1- 2016 009 376
- Anonymous: "Lift (force) - Wikipedia", , 24 May 2020 (2020-05-24), XP055699804, Retrieved from the Internet: URL:https://en.wikipedia.org/wiki/Lift_(fo rce) [retrieved on 2020-05-29]

## Description

### Technical Field

The invention relates to aviation equipment and can be used for designing aerodynamic (flying) apparatuses as well as for transport and hoisting devices.

### Background Art

The working fluid - air or another gas - flowing around the wing, generates different in magnitude pressures on its upper and lower surfaces caused by different speeds of streams above and below the wing, which results in creating lifting force (New Polytechnic Dictionary ed. by A.U. Ishlinsky. - Moscow: Research Publishing "Bolshaya Rossiyskaya Entsiklopediya", 2000. - p. 36, 252).

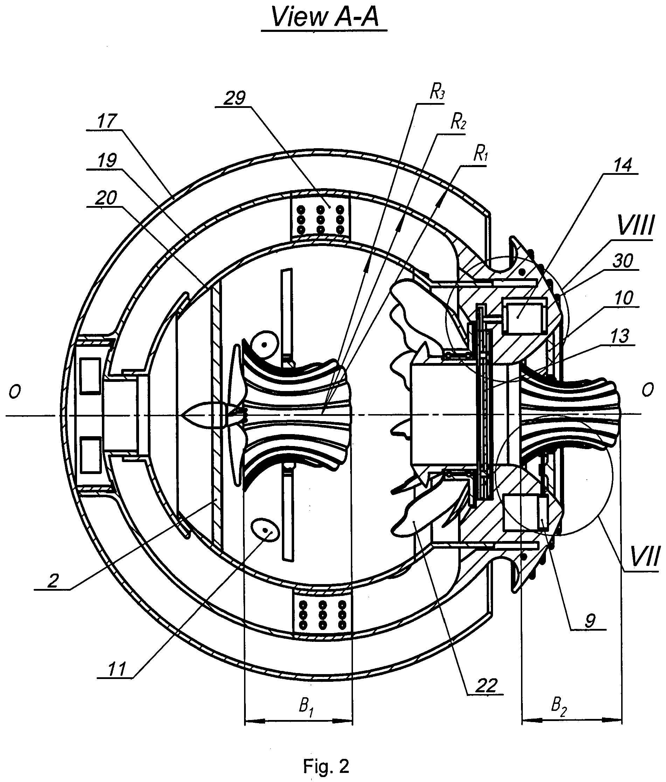

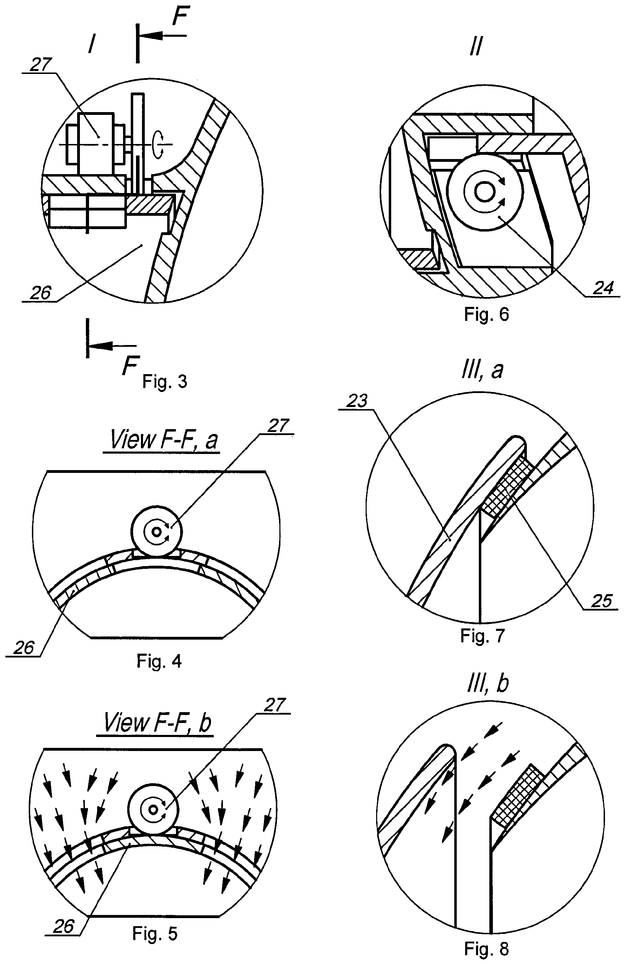

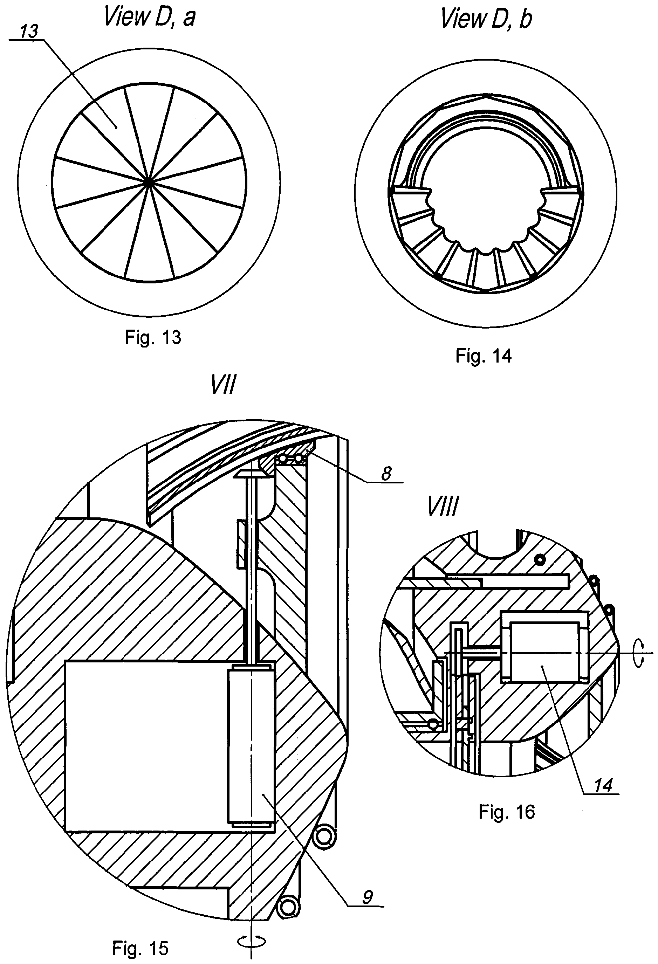

A conventional unmanned aerodynamic apparatus is capable of vertical take-off and landing as well as forward flight due to a special petal-like shape of the airfoil and to the blowing of the wing upper surface by the fan blower. (This analogous solution is covered by the following titles of protection: 1) innovation patent of the Republic of Kazakhstan No 29950 "Aerodynamic device", published Oct., 15, 2010, see therein Figure 15; 2) patent of the Republic of Kazakhstan No 29950 "Aerodynamic airfoil" published, Mar., 30, 2017, see therein Figure 15; 3) Eurasian patent No 027683 "Aerodynamic engine", published Aug.,31, 2017, see therein Figure 15; 4) European patent No 3077282B1 "Aerodynamic device", published Dec., 27, 2017, see therein Figure 15). The special shape wing is designed in the form of a double-curved open surface made up by a system of longitudinal grooves along the entire wing surface. It has a convergent segment, a transitional segment, and a divergent segment. The present invention also uses the aforesaid petal-like airfoil, the detailed description of which is provided in the aforesaid prior art.

The drawbacks of the aforesaid prior art are considerable energy losses determined by the following conditions.
1. Impossibility to reuse the power of the airflow coming off the wing by virtue of cycling, in other words, impossibility to return some of the aforesaid power to the beginning of the power gain process for the airflow created by an external source such as a working fan.
2. Impossibility to control the airflow power by varying the airflow mass by means of adjusting the density of the air participating in the process of generating lifting force and the airflow reaction force.
3. Impossibility to use force impulse of the airflow coming off the wing to generate additional force control moments for the aircraft controlled and stabilized flight.

The closest prior art is a device (aerodynamic apparatus) for generating lifting force which has three options (covered by the following titles of protection: 1) innovation patent of the Republic of Kazakhstan No 24691 "The device to generate lifting force (options)", published Oct. 17, 2011; 2) patent of the Republic of Kazakhstan No 24691 "The device to generate lifting force (options)", published Aug. 15, 2014; 3) Eurasian patent No 019321 "The device to generate lifting force (options)", published Feb. 28, 2014; 4) European patent No 2658776B1 «The device to generate lifting force (options)», published Mar. 29, 2017). This device apparatus contains a tubular body which make it possible to generate lifting force by arranging the fluid flow motion about the wing along both the closed and the open paths, depending on various operation modes; fan blowers with drive motors; wings having an aerodynamic contour in their section; a system for operating medium temperature control; an external communication unit.

The drawbacks of the prior art are energy costs:
1) due to a large amount of fan blowers;
2) due to a lengthy closed path of the airflow motion resulting in additional losses by friction with the body internal surface and between the airflow layers, which leads to the apparatus increased dimensions and weights, and, consequently, to increased energy costs;
3) due to the structural design of the external surface that has an increased contact area with the free air which results in increased energy costs induced by the external surface friction drag when the aircraft is moving in the atmosphere;
4) the wings of the prior art have in their section a conventional aerodynamic contour and a smooth spanwise surface without streamwise «crests», as a result, due to intensive airflow drift along the wing side edges from the lower surface to the upper surface, the lifting force generated on the wing is massively decreasing which significantly reduces the entire aircraft energy efficiency.

The common quality of the aforesaid drawbacks lies in the lack of optimization of some design parameters, which results in ineffective use of the operation medium motion energy.

### Summary of Invention

An object of this invention is to provide a new aerodynamic apparatus as disclosed in claim 1 that can obviate the above drawbacks of the prior arts and improve the efficiency of using the air flow power for generating lifting force, control moments and reactive thrust of the apparatus.

A preferred embodiment is disclosed in claim 2.

In the current apparatus, the functions of the external communication unit are performed by the appropriate valves.

The present invention, due to the principal design solutions connected with the use of the sphere-shaped external, middle and internal bodies affecting the nature of the operating medium motion, for the operating medium flow segments, the optimum sphere-shaped paths have been obtained, which minimizes losses by airflow friction. (Sphere is the surface of a ball. It is commonly known that according to the isoperimetric property of the ball (https://en.wikipedia.org/wiki/Sphere; and Blaschke, W. Kreis und Kugel. - Translated from German. - Moscow: Nauka, 1967, pp. 98-99) the sphere has the smallest surface area of all surfaces that enclose a given volume, and it encloses the largest volume among all closed surfaces with a given surface area. The sphere therefore appears in nature: for example, bubbles and small water drops are roughly spherical because the surface tension locally minimizes surface area.).

The concept of the invention is illustrated, by way of example, in the accompanying scheme drawings which show one of the preferred embodiments of the invention. These drawings have sufficient detail for understanding the essence of the invention.

### Brief Description of Drawings

The figures show the following parts listed in the table.

**Table**

| Figure number | Denominations |
|---|---|
| 1 | Main fan with the drive motor |
| 2 | Supporting means of the main fan |
| 3 | Primary rotary wing |
| 4 | Annular rotary means of the primary rotary wing |
| 5 | Motor with drive assemblies of the annular rotary means of the primary wing |
| 6 | Supporting means of the primary rotary wing |
| 7 | Steering rotary wing |
| 8 | Annular rotary means of the steering rotary wing |
| 9 | Motor with drive assemblies of the annular rotary means of the steering rotary wing |
| 10 | Supporting means of the steering rotary wing |
| 11 | Condensate collecting and draining system |
| 12 | Drain pump with a discharge tube of the condensate collecting and draining system |
| 13 | Rear shutter valve |
| 14 | Motor with the drive assemblies of the rear shutter valve |
| 15 | Rear bypass valve of the middle body |
| 16 | Motor with drive assemblies of the rear shutter valve of the middle body |
| 17 | External body |
| 18 | Fastening means of the external and middle bodies |
| 19 | Middle body |
| 20 | Internal body |
| 21 | Fastening means of the internal and middle bodies |
| 22 | Peripheral fan with the drive motor |
| 23 | Front bypass valve of the internal body |
| 24 | Motor with drive assemblies of the front bypass valve of the internal body |
| 25 | Seal of the internal body front bypass valve |
| 26 | Front bypass valve of the middle body |
| 27 | Motor with drive assemblies of the front bypass valve of the middle body |
| 28 | Compressor of the cooling facility |
| 29 | Evaporator with the throttle valve of the cooling facility |
| 30 | Condenser-radiator of the cooling facility |
| 31 | Landing gear |
| 32 | Landing gear motor with drive assemblies |
| 33 | Attitude orientation system |
| 34 | Automated control system |

It should be noted that in the following, for the sake of clarity of the disclosure of the invention, each separate figure shows primarily only those device units that are necessary for illustrating the essence of this or that part of the invention description (without extra units which can be conceptually omitted). The figures schematically represent the following.

Fig. 1 is a vertical plane section containing the plane of symmetry and the axial axis 0-0 of the aerodynamic apparatus, with an indication of the removal elements (or detail sections) *I-VI, IX* of figure.

Fig. 2 is a horizontal plane section A-A containing the axial axis O-O of the aerodynamic apparatus, with an indication of the removal elements *VII, VIII* of figure.

Fig. 3-5 are removal element *I,* where Fig. 4 shows an embodiment when the front bypass valve of the middle body (26) is closed, Fig. 5 shows an embodiment when the front bypass valve of the middle body (26) is open, the arrows show the airflow direction.

Fig. 6 -8 are removal element *II,* where Fig. 7 shows an embodiment when the front bypass valve of the internal body (23) is closed and fits tightly to the seal of the internal body front bypass valve (25), Fig. 8 shows an embodiment when the front bypass valve of the internal body (23) is open, the arrows show the airflow direction.

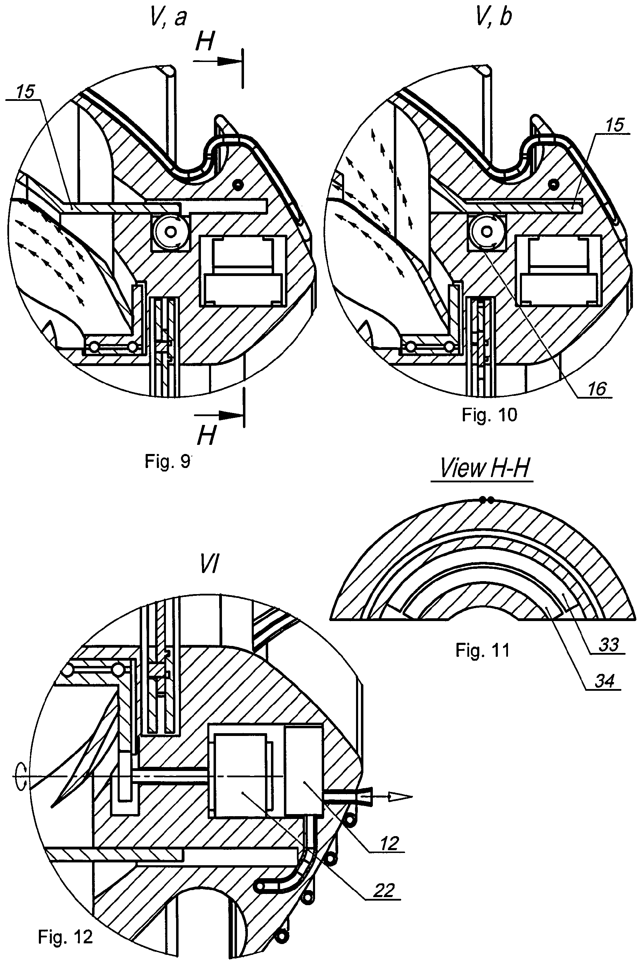

Fig. 9-11 are removal element *V* with an indication of the plane section H-H. In such a case, Fig. 9 shows the rear bypass valve of the middle body (15) when closed, all the airflow coming off the blades of the peripheral fan with the drive motor (22) stays within space y, the arrows show the airflow direction; Fig. 10 shows the rear bypass valve of the middle body (15) when it is fully open, in this case, the airflow coming off the blades of the peripheral fan with the drive motor (22) is divided into two flows, when one part moves to space *γ* and the other moves to space *β*. Fig. 11 shows a scaled-down version of section H-H from Figure 9 that represents the arrangement of the attitude orientation system (33) and the automated control system (34).

Fig. 12 shows the arrangement of the peripheral fan with the drive motor (22) as well the drain pump with a discharging tube (for draining the condensate into the atmosphere) (12) of the condensate collecting and draining system.

Fig. 13-14 show view D (a, b), where Fig. 13 represents the fully closed position of the rear shutter valve (13) and Fig. 14 represents the fully open position of the rear shutter valve (13).

Fig. 15 shows removal element *VII,* which represents the arrangement of the annular rotary means of the steering rotary wing (8) as well as the motor with drive assemblies of the annular rotary means of the steering rotary wing (9).

Fig. 16 shows removal element *VIII,* which represents the arrangement of the motor with drive assemblies of the rear shutter valve (14).

Fig. 17 shows section B-B square to the axial axis O-O.

Fig. 18-19 are removal element *IV* with an indication of section plane C-C. It represents the arrangement of the annular rotary means of the primary rotary wing (4), the motor with drive assemblies of the annular rotary means of the primary wing (5), the supporting means of the primary rotary wing (6). Fig. 19 represents section C-C showing the cross section of the supporting means of the primary rotary wing (6) and the motor (5).

Fig. 20 shows the design scheme of the condensate collecting and draining system (11), provided with the drain pump with a discharge tube (12).

Fig. 21 shows the isometric view of the intersected with the longitudinal plane of symmetry aerodynamic apparatus design scheme, without external body (17), for better visualization of the arrangement and understanding the functional purpose of the apparatus internal parts. For example, it shows the location of the steering rotary wings (7) in the annular rotary means of the steering rotary wing (8) offset through 180 degrees around the axial axis (0-0) with respect to the position shown in Fig. 1 and 2.

Fig. 22 shows the isometric view of the intersected with the longitudinal plane of symmetry aerodynamic apparatus design scheme, without external body (17) and the middle body (18), for better visualization of the arrangement and understanding the functional purpose of the apparatus internal parts. For example, it shows the location of the primary rotary wings (3) in the annular rotary means of the steering rotary wing (4) offset through 60 degrees around the axial axis (0-0) with respect to the position shown in Fig. 1 and 2.

Fig. 23-24 show removal element *IX* (a*,* b). It represents the arrangement of the landing gear (31) and the motor of the landing gear with drive assemblies (32). In Fig. 23 the landing gear (31) is shown when extended, while in Fig. 24 the landing gear (31) is shown when fully retracted.

In Fig. 25 the arrows show possible paths of the airflow in space *γ* when affected by the main fan with the drive motor (1) and the peripheral fan with the drive motor (22).

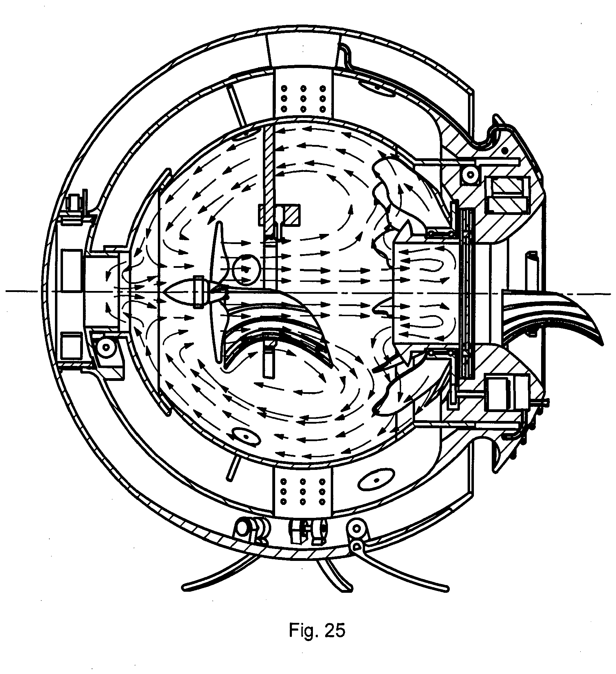

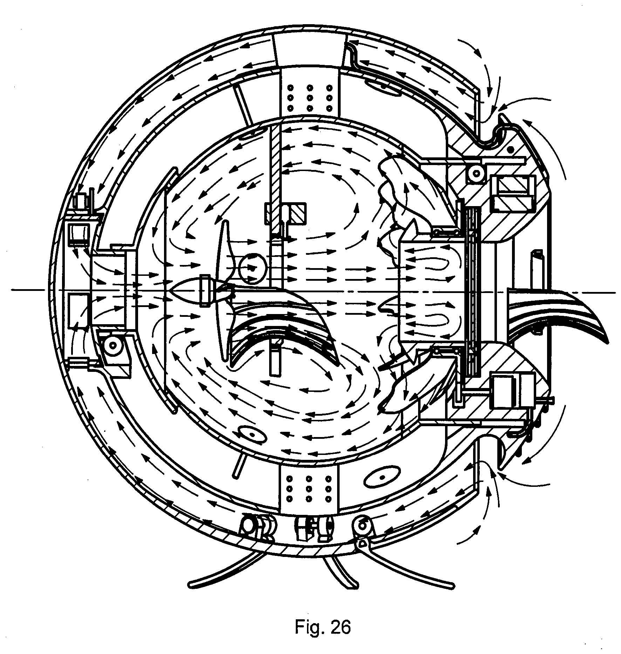

In addition to what is shown in Fig. 25, the arrows in Fig. 26 show possible paths of the airflow from the atmosphere through space α to space γ with the front bypass valve of the middle body (26) opened and the free air involved in the processes in space γ.

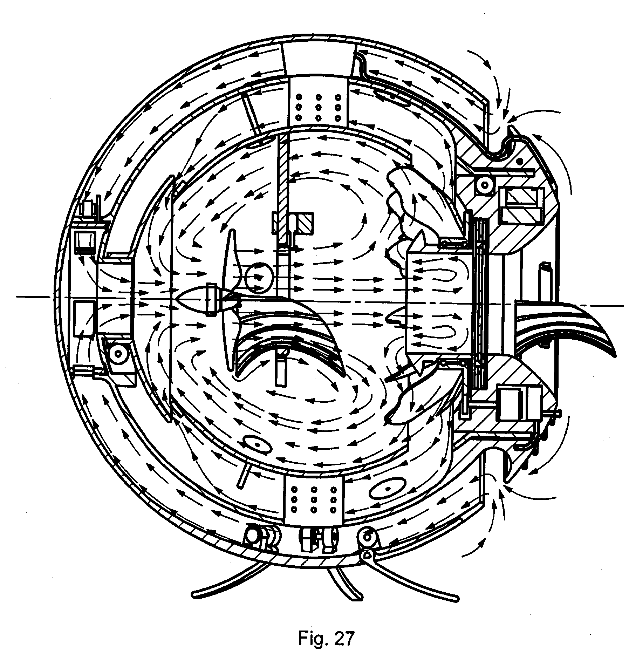

In addition to what is shown in Fig. 25 and 26, the arrows in Fig. 27 show possible airflow travel from space *γ* to space *β* and then back to space *γ* with the rear bypass valve of the middle body (15) and the front bypass body of the internal body (23) being simultaneously open.

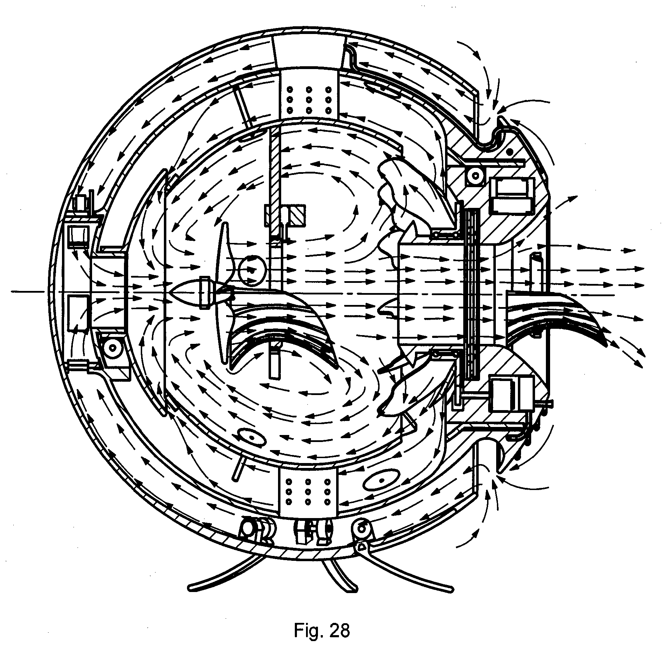

In addition to what is shown in Fig. 25, 26 and 27, the arrows in Fig. 28 show possible airflow travel from space γ to the atmosphere with the rear shutter valve (13) open.

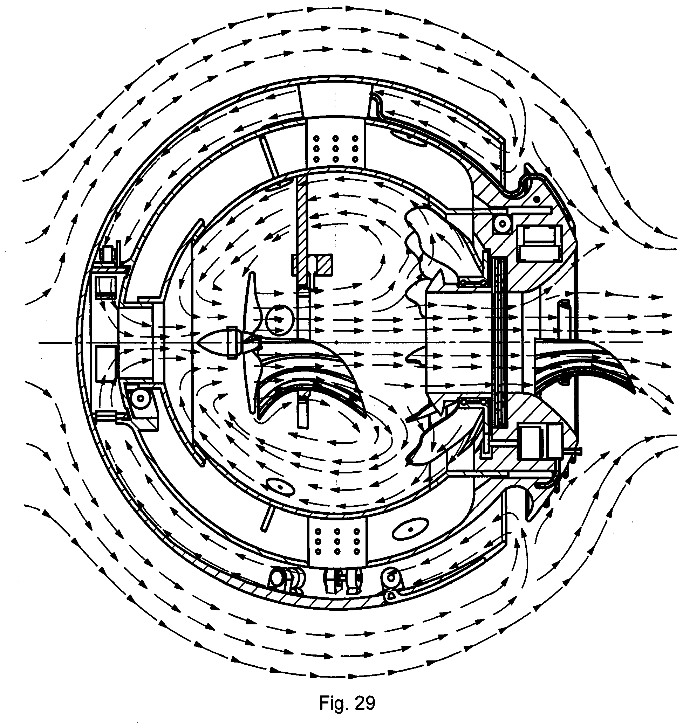

In addition to what is shown in Fig. 26, the arrows in Fig. 29 show a possible airflow travel with the rear shutter valve (13) open, as well as a possible airflow travel with the aerodynamic translational motion in the atmosphere.

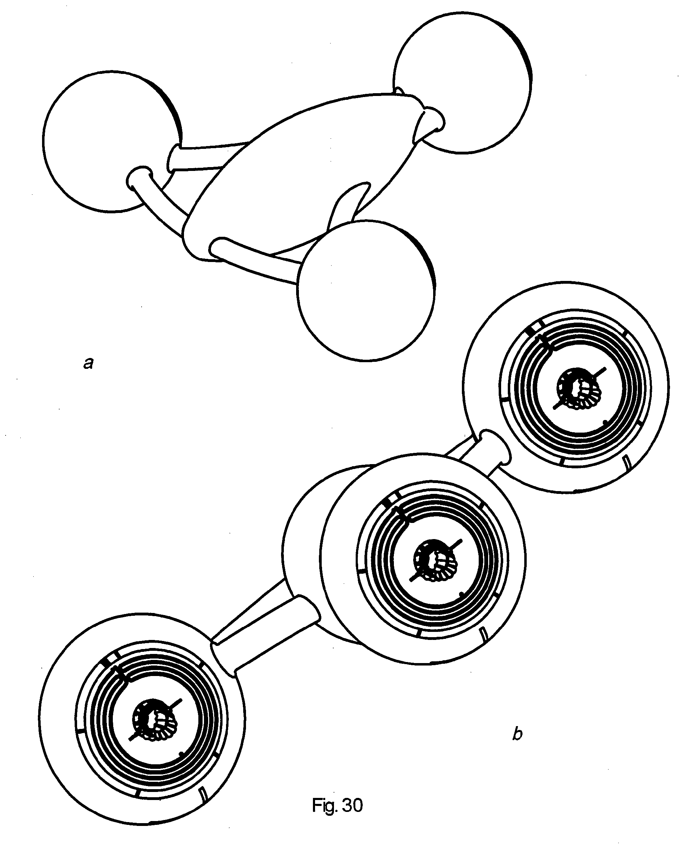

Fig. 30 shows a complex aircraft consisting of three modules of the current invention connected to each other with rigid structural members. In the centre of the apparatus there is a body rigidly connected with these structural members; the body can hold the payload, energy storage devices, the integrated control system, etc. For clarity, Fig. 30 (a, b) has two drawings of the complex aerodynamic apparatus.

### Modes for Carrying out the Invention

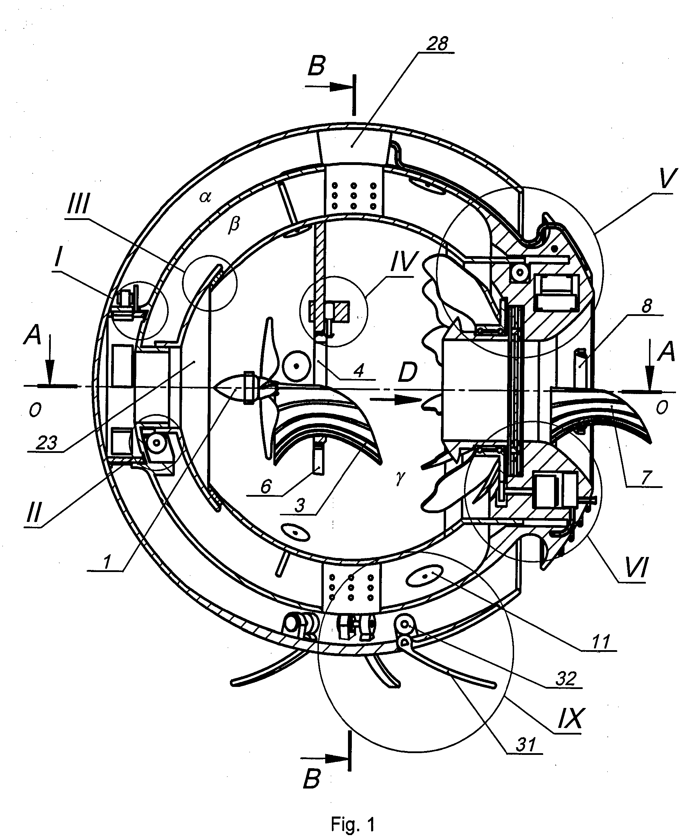

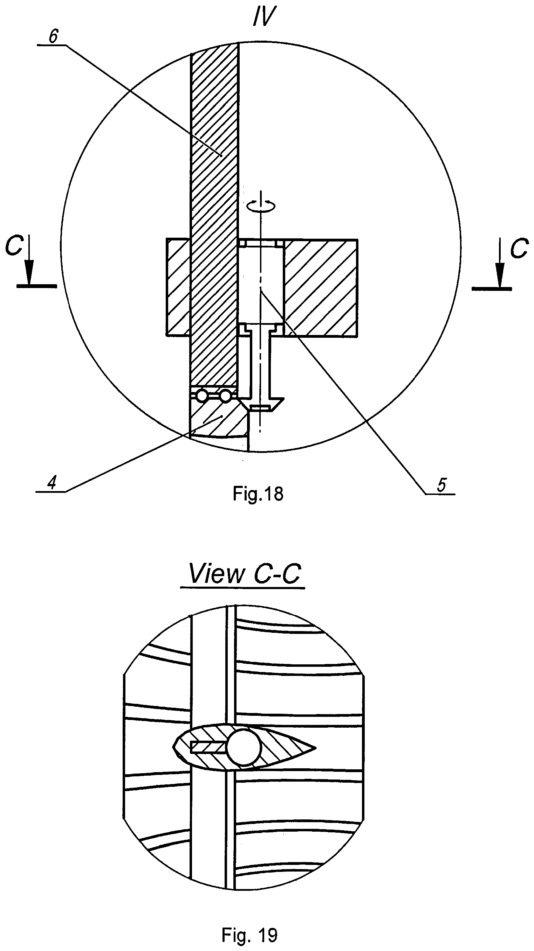

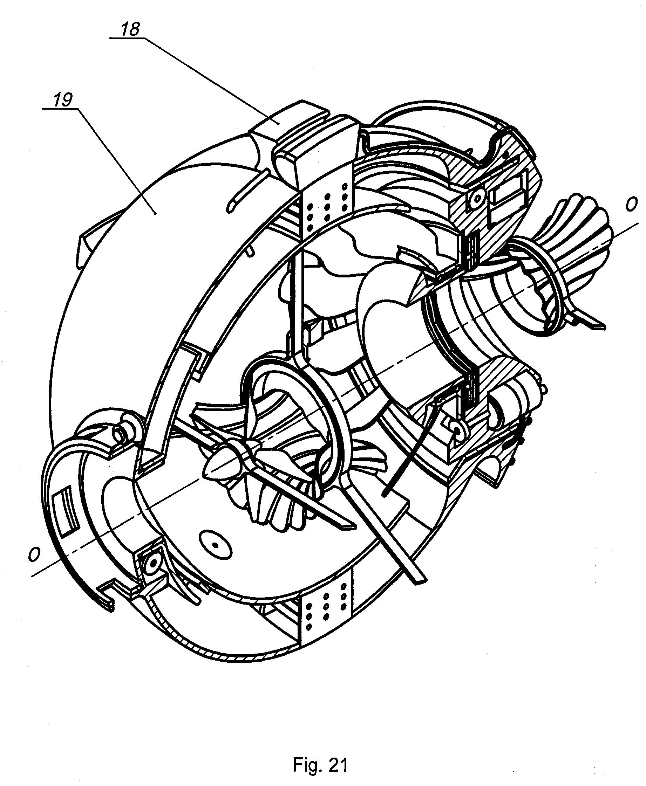

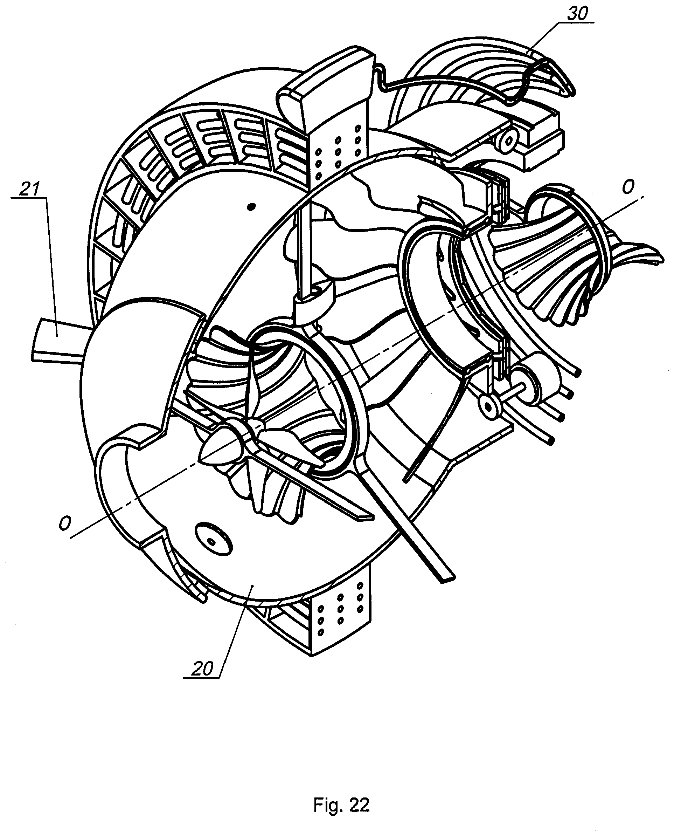

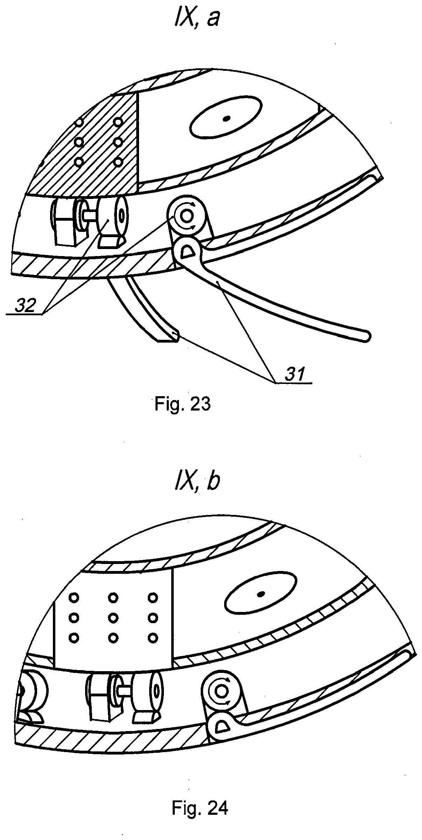

The present aerodynamic apparatus operates as follows (Figures 1-30).

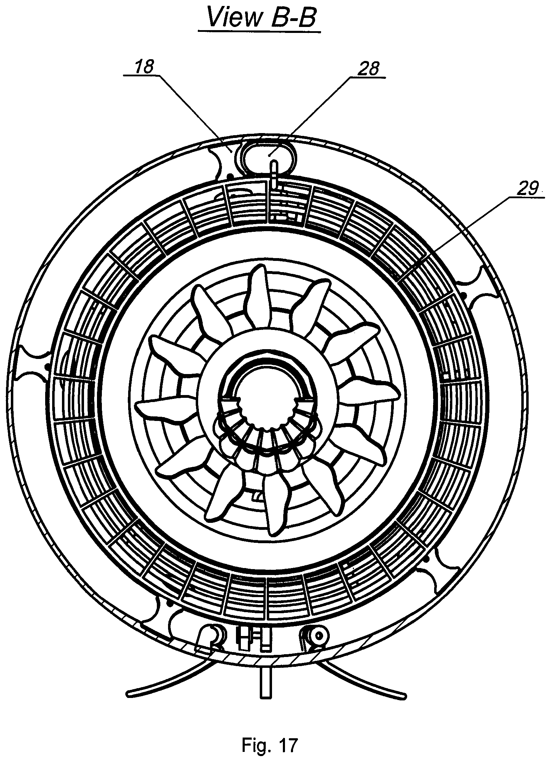

The main structural components of the apparatus consist of three spherical bodies (17, 19, 20) (Fig. 1, 2, 17, 21, 22). The spherical structures are essentially rigid lifting bodies (17, 19, 20) connected to each other by means of fastening means (18, 21) (Fig. 17, 21, 22) which locks the position of the spheres relative to each other and capable of exchanging the dynamic loads of various elements located within the apparatus as well as of receiving the dynamic loads from the external environment around the apparatus.

The internal body (20) is a rigid lifting structure containing the following units (Fig. 1, 2).

The main fan with the drive motor (1) and supporting means of the main fan (2) having aerodynamic blades capable of blowing air in the required direction (Fig. 1, 2).

The primary rotary wing (3) made in a petal-like shape with the annular rotary means of the primary rotary wing (4) provided with the motor (with drive assemblies) of the annular rotary means of the primary wing (5) and supporting members of the primary rotary wing (6) (Fig. 1, 18, 19), transfers the force interaction of the airflow and the primary rotary wing (3) to the rigidly connected bodies (17, 19, 20). The primary wing (3) takes the airflow from the main fan (1) and generates lifting force by virtue of such air properties as continuity, compressibility and viscosity. The process of air flowing around the primary rotary wing (3) creates a low-pressure area on the upper surface of the wing (3) and a highpressure area on the lower surface which generates on the wing (3) a resultant transverse force directed to the axial axis O-O. The supporting means (6) transfer the force interaction of the airflow and the wing (3) to the internal body (20) and then, through the powered fastening means (18, 21), they transfer the force to the middle body (19) and the external body (17) of the apparatus.

From the side of the trailing edge of the primary rotary wing (3) on the surface of the internal body (20) there is an opening (Fig. 1, 2) connecting spaces *γ* and *β* for the operating medium and regulated by the middle body rear bypass valve (15) controlled by the motor (with drive assemblies) of the rear bypass valve of the middle body (16) (Fig. 9, 10). When the rear bypass valve of the middle body (15) is open (Fig. 10, view *V*, b) some amount of the air heated in space *γ* goes to the surface of the evaporator with the throttle valve of the cooling facility (29) rigidly mounted in space *β* (Fig. 2, 17). The evaporator with the throttle valve of the cooling facility (29) are two (the first and the second) of the four main units of the cooling facility and make part of the system controlling the operating medium temperature. The cooling facility also has the third and the fourth main units, such as the compressor of the cooling facility (28) rigidly mounted in space *α* (Fig. 1, 17) and the condenser-radiator of the cooling facility (30) rigidly mounted on the rear outer hemisphere of the external body (17) whose pipelines are blown over with the free air (Fig. 2). The locations of the other inessential auxiliary standard members of the cooling facility are of no crucial significance and, therefore, are not shown in figures. (It is commonly known (Chumak, I.G., Chepurnenko, V.P. Cooling facilities. - Moscow: Agropromizdat, 1991, P. 12, P. 495) that a refrigerating unit consists of four main parts: an evaporator, a throttle valve, a compressor and a condensate). As a result, the heat-generating operating parts of the apparatus are cooled by the atmospheric air moving inside the apparatus with the assistance of the cooling facility.

Along the axial axis of the main fan with the drive motor (1) there is a peripheral fan (with the drive motor) (22) rigidly mounted in coaxial alignment (Fig. 1, 2, 12, 17).

Air heating in the internal space *γ* also results from the action of friction forces between air layers and mechanical parts touching the high-energy air which continuously receives energy from the blades of the fans with drive motors (1) and (22). The greatest heating of the air in the internal space *γ* occurs when the opening, which is shut by the controlled rear bypass valve of the middle body (15), is closed (Fig. 9, 10). In so doing, due to simultaneous operation of the drive motors of the fans (1) and (22), the air from the main fan (1) goes towards the primary rotary wing (3) and, after passing it, comes to the blades of the periphery fan (22) that directs the airflow towards the main fan (1) along the internal surface of the internal body (20) retaining the direction of the airflow rotation that was prior imposed on it by the main fan (1). The air attracted by the centrifugal forces and the viscosity forces to the inner surface of the inner body (20) travels to the area hereinafter referred to as the «main fan entrance area» located between the front bypass valve of the middle body (26) and the rotation plane of the main fan (1) blades. After that, the airflow turns back, passes the main fan entrance area and gets into the operating area of the main fan rotating blades (1). Then the airflow gets another force impulse from the operating fan (1) and comes to the primary wing (3). Thus, within the inner space y, due to continuously repeating cycles, it is possible to accelerate the air to high speeds and, by doing so, to generate a great lifting force on the primary wing (3), nevertheless, the air involved in the process is heated.

In space *β*, along the axial axis of the main fan with the drive motor (1), there is a front bypass valve of the internal body (23) (Fig. 1), driven by the motor (with drive assemblies) of the front valve of the internal body (24) (Fig. 1, 6) that allows for controlling the air travel from space *β* to space *γ* (when the rear bypass valve is open (15) (Fig. 10, view *V,* b), it is used for taking the air cooled in space *β* by means of the evaporator with the throttle valve (29)), such being the case, on the surface of the internal body (20) there is a seal of the internal body front bypass valve (25) (Fig. 1, 7, 8) which, when for the closed position of the internal body front bypass valve (23), allows for proper pressurization which prevents the air travel from space *β* to space *γ*.

In the direction of the flow of the operating media, coming off the primary rotary wing (3), along the fans axial axis (1, 22) on the middle body (19), there is a rear shutter valve (13) (Fig. 2, 13, 14) driven by the motor (with drive assemblies) of the rear shutter valve (14) (Fig. 16) and used to control the air travel from space *γ* to the atmosphere. The closed position of the rear shutter valve (13) is shown in Fig. 13, view *D,* a; the open position is shown in Fig. 14, view *D,* b.

The outgoing air comes to the petal-like steering rotary wing (7) (Fig. 1, 2) located along the axial axis of the fans (1, 22) behind the rear shutter valve (13), having an annular rotary means of the steering rotary wing (8) (Fig. 1, 15) and provided with the motor (with drive assemblies) of the annular rotary means of the steering rotary wing (9) (Fig. 2, 15) and the steering rotary wing supporting means (10) transferring the force interaction between the airflow and the steering rotary wing (7) to the external body (17). The steering wing (7) is mechanically connected with the bearing structural components of the apparatus and - together with the primary wing (3) - is used to create force control moments for the aircraft controlled and stabilized flight in the air space. Moreover, the air going to the atmosphere, generates reactive that contributes to the apparatus translational motion.

Along the fans axial axis (1, 22) in space *α* there is a front bypass valve of the middle body (26) (Fig. 1, 3, 4, 5) driven by the motor (with drive assemblies) of the front bypass valve of the middle body (27) (Fig. 1, 3, 4, 5) and used to control the air travel from the atmosphere to spaces *α* and *y,* consecutively. The closed position of the front bypass valve of the middle body (26) is shown in Fig. 4, section *F-F,* a; the open position is shown in Fig. 5, section *F-F,* b.

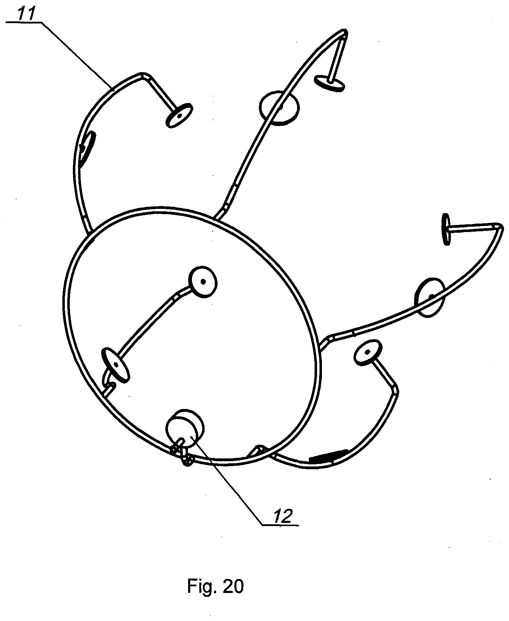

The free air coming into the apparatus, due to the process of suction, compression and thickening, normally results in condensate formation, therefore the apparatus is provided with a condensate collecting and draining system (11) (Fig. 1, 2, 20) located in the inter-body spaces of the apparatus. By means of a drain pump with a discharge tube (12) of the condensate collecting and draining system (Fig. 12, 20), the condensate is discharged into the atmosphere.

The middle body (19) contains the attitude orientation system (33) (Fig. 11) and the automated control system (34) (Fig. 11).

The lower part of the external body (17) of the apparatus contains a steerable landing gear (31) (Fig. 1, 17, 23, 24) provided with landing gear motors with drive assemblies (32) (Fig. 1, 17, 23, 24). In such a case, for the landing gear retracted position, the lower part of the external body has an indention (Fig. 1, 23, 24), in such a manner that with the help of the indention, the retracted landing gear (31) fits the external body structure minimizing the external body (17) friction drag while moving in the atmosphere. The landing gear (31) receives the control commands from the attitude orientations system (33) and from the automated control system (34) and changes the opening angle of its units, which secures the apparatus assigned position on the support surface (such as ground), depending on the slope or the density of the support surface.

To secure a stable and safe flight in the air, provision is made for a certain sequence in the operation of the apparatus units at each stage of take-off, evolution (various manoeuvres) in air and landing on the rigid supporting area. In so doing, from the moment of take-off to the moment of reaching a safe altitude, it is necessary to ensure that the design allows for complying the requirements - with respect to the centre of mass of the apparatus, the sum of all the moments of the aerodynamic forces generated by the airflow inside the apparatus, secures the position of the axial axis (0-0) parallel to the horizon of the take-off site taking into account the operation of the automated control system (34) and the attitude orientation system (33).

At the stage of take-off, the landing gear (31) should ensure that the position of the apparatus vertical symmetry plane should be square to the horizon of the take-off site, while the horizontal cross plane, including the axial axis O-O, should be parallel to the take-off site horizon. At the starting moment, the plane of symmetry of the primary wing (3) and the steering wing (7) should agree with the apparatus vertical symmetry plane, while the bypass valves (15, 23, 26) and the rear shutter valve (13) should be closed. The air in the internal space *γ* is circulated by the simultaneous starting of the main fan with the drive motor (1) and the peripheral fan with the drive motor (2). The air, first under the action of the rotating blades, travels from the main fan (1) in the internal space *γ* interacting with the primary wing (3), and then comes to the rotating airfoil blades of the periphery fan (22) that direct the air along the inner surface of the internal body (20). When this takes place, the air is retained in this part of the internal body (20) by the centrifugal forces and the viscosity forces of the air «washing» the inner surface of the internal body (20). In so doing, the peripheral fan (22) keeps the rotation direction of the airflow imposed by the main fan (1). From there, the air goes to the main fan entrance area, interacts with the specially designed airfoil blades of the main fan (1), gets another force impulse, and, at a high speed, directs to the surface of the primary wing (3), after which the cycle begins to repeat. After that, the motor (27) opens the front bypass valve of the middle body (26) and the free air, though the annular opening in the rear hemisphere of the external body (17), passing in the space *β* through the openings in the front bypass valves of the middle body (26), goes to the main fan entrance area, gets into the operating area of the rotating blades of the main fan (1) and joins the dynamic process of the air motion in the internal space *γ*. Here, due to increased air density, the air mass is growing and the energy potential of the process is rising, which is very important at take-off, for example, in high mountains. As the air temperature is growing, the cooling facility starts to operate, and, at the same time, motor (24) opens the front bypass valve of the internal body (23) and motor (16) opens the rear bypass valve of the middle body (15). In so doing, the air heated in the cyclic process, is moving from the internal body (20) to the inter-body space *β* and, blowing around the evaporator with the throttle valve of the cooling facility (29), begins to cool off. After that, the cooled air, through the annular opening formed by displacement of the front bypass valve of the internal body (23), enters the main fan entrance area, mixes with the air in the internal body *γ* and the free air coming from through the front bypass valve of the middle body (26), and from there the mixed air continues to participate in the cyclic process in the internal body *γ*. The cooled air that that comes in the manner described above, reduces the overall temperature of the air participating in the cyclic process in the internal space *γ*.

As the speed of the airflow above the upper surface of the primary wing (3) grows, the pressure difference on the upper and the lower wing surfaces (3) grows too, which generates on the wing surface area (3) a lifting force, that is transverse to the flow. For certain speed values of the airflow interacting with the primary wing (3), the lifting force is greater than or equal to the weight of the apparatus.

At the moment when the lifting force counterbalances the weight of the apparatus, the motor (14) begins to open the rear shutter valve (13) and the high-energy air from the internal space *γ* begins to flow out into the atmosphere interacting with the underlying surface of the steering rotary wing (7). The automated control system (34), taking into account the intensity and direction of the crosswind acting on the external body (17), issues a control command to the motor of the annular rotary means of the rotary wing (9) to change the position of the steering rotary wing (7) so that to generate a transverse force on the rotary wing (7) that would turn the apparatus around the vertical axis, which is passing through the centre of mass of the apparatus against the horizontal component of the crosswind, while the reaction force generated by the airflow going from the apparatus, should fully compensate the force of the crosswind horizontal component acting on the external body (17). Having generated a lifting force equal to its own weight and having compensated the crosswind action in terms of direction and force, the apparatus is ready take off. Speeding up the motors of the main fan (1) and the peripheral fan (22) generates a lifting force exceeding the weight of the apparatus and switches it to the take-off mode. Taking into account the environmental conditions, take-off site and wind direction, the automated control system (34) of the apparatus brings the target take-off trajectory to the required altitude and controls the speed of fan motors (1, 22), the position of the primary (3) and the steering (7) rotary wings and the other units of the apparatus. Having reached the safe altitude, the position of the apparatus axial axis (O-O) can be arbitrary and should correspond to the control program. Since both the primary (3) and the steering (7) wings built into the annular rotary means (4) and (8), respectively, are able of 360 degree rotation around the axial axis O-O, these wings (3, 7), by interacting with the rate-controlled windstream, are able to produce the required composition of control force moments with respect to the centre of mass of the apparatus in such a way that the apparatus is capable of intended evolutions (various manoeuvres) in air using the controlled reaction force of outgoing the high-energy air.

Depending on the current information coming from the attitude orientations system (33) (in the general case, these are: space coordinate values, linear and angular speeds accelerations of the aerodynamic apparatus) , the information on the environment conditions (in the general case, these are: air density and temperature, wind direction and strength), and on the application tasks, by controlling the rotation of the main fan motor (1), the peripheral fan motor (22), the motor of the annular rotating means of the primary wing (5), the motor of the annular rotating means of the steering wing (9) as well as the motors (14, 16, 24, 27) controlling the operation of the rear (13) and the bypass (15, 23, 26) valves - the automated control system (34) moves the apparatus along its path in the three-dimensional space, as well as accelerates or decelerates its motion along this path, including full stop (hovering).

An important feature of the apparatus is its ability, while controlling the operation of the bypass valves (15, 23, 26) and the cooling facility, to control the air density and temperature and, in so doing so, to optimise the process of generating lifting force, reactive thrust and motion control. This ability makes it independent of the altitude of the take-off or the flight. Take-off and flight are possible in the conditions very tenuous air of high mountains or very hot air of deserts. Due to the units that control the air density in the internal space *γ* and participate in the process of generating lifting force and control moments, it is possible to obviate the need for high-aspect wings when flying at high altitudes where the air isexceedingly tenuous. Owing to the latest systems of flight data acquisition and processing, the present system of the apparatus motion control reduces the speed of closing on the landing point to reasonably small values and ensures landing on any relatively even surface as well as on the water. In so doing, the aforesaid systems will be similar for both heavy and light apparatuses.

Moreover, building a complex apparatus consisting of two, three or more units of the present invention, makes it possible to build load-lifting vehicles, both automatically controlled and man-controlled, with common system of life support and control. Such load-lifting vehicles can be provided with transporting pallets combined into a single load-carrying structure as shown in Fig. 30.

Unlike common rotary-wing vertical take-off and landing aircraft, the present invention has considerably extended and simplified capabilities to build various means of rescue and emergency landing.

To optimise some design characteristics of the apparatus with the aim of eliminating the disadvantages of the conventional analogs, the standard design-theoretical methods and model tests established in fluid mechanics (Encyclopedic Dictionary of Physics / ed. by A.M. Prokhorov. - Moscow: Sovetskaya Entsiklopedia, 1983. - 928 p.; Krasnov, N.F., Aerodynamics. Part I. Theoretical Framework. Airfoil and Wing Aerodynamics. Technical college textbook. - Moscow, Vysshaya Shkola, 1976. - 384 p.; Krasnov, N. F., Aerodynamics. Part II. Aerodynamics Technology. Textbook for technical college students. - 3rd edition, revised and enlarged. - Moscow, Vysshaya Shkola, 1980. - 416 p.) have revealed the following.

Other things being equal, the ratio of the internal surface radius of the external body to the internal surface radius of the middle body R₁ / R₂ is ranging from 1.06 to 1.65; while the ratio of the internal surface radius of the middle body to the internal surface radius of the internal body R₂ / R₃ is ranging from 1.03 to 1.55; see Fig. 2.

Other things being equal, for the chords, lying on the corresponding planes of symmetry of the wings (3, 7) and having the maximum dimensions, the ratio between maximum dimension of the primary rotary wing chord and the maximum dimension of the steering rotary wing chord B₁ / B₂ is ranging from 0.59 to 18.5; see Fig. 2.

Hence, it was found that the proposed ranges are optimal. In other cases, beyond these optimal ranges, the efficiency of utilizing the air flow power used for generating the wing resultant lifting force, declines by at least 15%.

## Claims

1. An aerodynamic apparatus containing an external body (17) able to provide for a motion of a gaseous operation medium, such as air, and to use controlled reaction forces of the gaseous operation medium for various maneuvers; with fan blowers each respectively comprising a first and second drive motor (1 , 22); a primary wing (3) and a steering wing (7);
a system for gaseous operation medium temperature control (28, 29, 30); an external communication unit (13, 14, 15, 16, 23, 24, 26, 27) with openings in the external body (17), whereby the functions of the external communication unit are performed by appropriate valves (13, 15, 23, 26);
**characterized in**
**that** the external body (17) of the apparatus is sphere shaped;
inside the external body (17) there is a sphere shaped middle body (19) which is rigidly connected to the external body (17) with fastening means (18), with space α between these bodies (17, 19);
inside the middle body (19) there is a sphere shaped internal body (20) which is rigidly connected to the middle body (19) with fastening means (21), with space β between the middle body (19) and the internal body (20) and with a space γ within the internal body (20);
in the space γ there is the main fan with the first drive motor (1), which is rigidly connected to the internal body (20) by a supporting means (2) of the main fan, comprising the primary wing (3) which is made in a petal-like shape with annular rotary means (4) provided with a motor (5) including drive assemblies of the annular rotary means (4) for annular rotation of the primary wing (3) around an apparatus axial axis (O-O) and with supporting means (6) of the primary wing (3);
on the surface of the internal body (20) on a side of a trailing edge of the primary wing (3) there is an opening connecting spaces γ and β for the operation medium which is regulated by a rear bypass valve (15) of the middle body (19), the bypass valve (15) being controlled by a motor (16) with drive assemblies of the rear bypass valve of the middle body;
the apparatus is provided with the system for operating medium temperature control (28, 29, 30) having the following arrangement of its main units:
- a cooling facility comprising
- a compressor (28) which is rigidly mounted in space α,
- an evaporator (29) with a throttle valve, which is rigidly mounted in space β, and
- a condenser-radiator (30) which is rigidly mounted on a rear outer hemisphere of the external body (17);
along an axial axis of the main fan with a first drive motor (1) on the middle body (19) there is the peripheral fan, for directing the operation medium back to the main fan, with the second drive motor (22) rigidly mounted in coaxial alignment;
in space β along the axial axis (O-O) of the main fan with the first drive motor (1) there is a front bypass valve of the internal body (23) driven by a motor with drive assemblies of the front bypass valve of the internal body (24) that allows for controlling air travel from space β to space γ,
wherein on the surface of the internal body (20) there is an internal body front bypass valve seal (25) which, for the closed position of front bypass valve of the internal body (23), allows for proper pressurization and prevents air travel from space β to space γ;
in the direction of the flow of the operation media, coming off the primary wing (3), along the axial axis of the fans (1 , 22) on the middle body (19) there is a rear shutter valve (13) driven by a motor with drive assemblies of the rear shutter valve (14) and used to control air travel from space γ to the atmosphere;
along the axial axis (O-O) of the fans (1, 22) behind the rear shutter valve (13) there is the steering wing (7) for interaction with operation medium that flows outwardly from the internal space γ towards the atmosphere made in a petal-like shape with annular rotary means (8) of the steering wing (7) for annular rotation around an apparatus axial axis (O-O) provided with a motor with drive assemblies (9) of the annular rotary means of the steering wing and supporting means (10) of the steering wing (7); along the axial axis of the fans (1, 22) in space α there is a front bypass valve of the middle body (26) driven by a motor with drive assemblies (27) of the front bypass valve of the middle body and used to control the air travel from the external atmosphere to spaces α and γ consecutively;
in the inter-body spaces of the apparatus there are facilities of the condensate collecting and draining system (11) which is provided with a drain pump with a discharge tube (12);
in the lower part of the external body (17) of the apparatus there is a retractable landing gear (31) provided with landing gear motors with drive assemblies (32), in so doing, for the landing gear retracted position, the lower part of the external body has an indention designed in such a manner that, with the help of the indention, the retracted landing gear (31) fits the external body structure, thus minimizing the free air aerodynamic drag when it flows around the external body (17);
the middle body (19) contains an attitude orientation system (33) and an automated control system (34).

2. The aerodynamic apparatus of claim 1
**characterized in**
**that** a ratio of an internal surface radius R₁ of the external body (17) to an internal surface radius R₂ of the middle body (19) is ranging from 1.06 < R₁/R₂< 1.65; while the ratio of the internal surface radius R₂ of the middle body (19) to an internal surface radius R₃ of the internal body (20) is ranging from 1.03 < R₂/R₃ <1.55; for the chords, lying on the corresponding planes of symmetry of the wings (3, 7) and having the maximum dimensions, the ratio between the maximum dimension of chord B₁ of the primary wing (3) and the maximum dimension of chord B₂ of the steering wing (7) is ranging from 0.59 < B₁/B₂< 18.5.

## Patentansprüche

1. Aerodynamische Vorrichtung, die einen äußeren Körper (17) enthält, der in der Lage ist, für eine Bewegung eines gasförmigen Betriebsmediums, wie z.B. Luft, zu sorgen und gesteuerte Reaktionskräfte des gasförmigen Betriebsmediums für verschiedene Manöver zu verwenden;
mit Gebläsen, die jeweils einen ersten und zweiten Antriebsmotor (1, 22) aufweisen; einen Primärflügel (3) und einen Steuerflügel (7);
ein System zur Temperaturregelung des gasförmigen Betriebsmediums (28, 29, 30); eine externe Kommunikationseinheit (13, 14, 15, 16, 23, 24, 26, 27) mit Öffnungen im Außenkörper (17), wobei die Funktionen der externen Kommunikationseinheit durch entsprechende Ventile (13, 15, 23, 26) ausgeführt werden;
**dadurch gekennzeichnet**
**dass** der Außenkörper (17) der Vorrichtung kugelförmig ist;
innerhalb des Außenkörpers (17) ist ein kugelförmiger Mittelkörper (19) vorhanden, der mit Befestigungsmitteln (18) starr mit dem Außenkörper (17) verbunden ist, wobei zwischen diesen Körpern (17, 19) Zwischenraum α besteht;
im Inneren des Mittelkörpers (19) befindet sich ein kugelförmiger Innenkörper (20), der mit Befestigungsmitteln (21) starr mit dem Mittelkörper (19) verbunden ist, mit einem Zwischenraum β zwischen dem Mittelkörper (19) und dem Innenkörper (20) und mit einem Raum γ innerhalb des Innenkörpers (20);
im Raum γ befindet sich der Hauptlüfter mit dem ersten Antriebsmotor (1), der durch ein Tragmittel (2) des Hauptlüfters starr mit dem Innenkörper (20) verbunden ist,
mit dem primären Flügel (3), der in einer blütenblattartigen Form mit ringförmigen Drehmitteln (4) hergestellt ist, die mit einem Motor (5) einschließlich Antriebsbaugruppen der ringförmigen Drehmittel (4) zur ringförmigen Drehung des primären Flügels (3) um eine axiale Achse (O-O) der Vorrichtung und mit Stützmitteln (6) des primären Flügels (3) versehen sind;
auf der Oberfläche des Innenkörpers (20) auf einer Seite einer Hinterkante des Primärflügels (3) befindet sich eine die Räume γ und β verbindende Öffnung für das Betriebsmedium, die durch ein hinteres Bypass-Ventil (15) des Mittelkörpers (19) geregelt wird, wobei das Bypass-Ventil (15) durch einen Motor (16) mit Antriebsbaugruppen des hinteren Bypass-Ventils des Mittelkörpers gesteuert wird;
das Gerät ist mit dem System zur Steuerung der Temperatur des Betriebsmediums (28, 29, 30) ausgestattet, das die folgende Anordnung seiner Haupteinheiten aufweist:
- eine Kühleinrichtung mit
- einem Kompressor (28), der starr im Zwischenraum α montiert ist,
- einem Verdampfer (29) mit einem Drosselventil, das starr im Raum β montiert ist, und
- einem Kondensator-Radiator (30), der starr an einer hinteren äußeren Halbkugel des Außenkörpers (17) angebracht ist;
entlang einer axialen Achse des Hauptventilators mit einem ersten Antriebsmotor (1) auf dem Mittelkörper (19) befindet sich der Peripherieventilator, um das Betriebsmedium zurück zum Hauptventilator zu leiten, wobei der zweite Antriebsmotor (22) in koaxialer Ausrichtung fest montiert ist;
im Raum β entlang der axialen Achse (O-O) des Hauptventilators mit dem ersten Antriebsmotor (1) befindet sich ein vorderes Bypass-Ventil des Innenkörpers (23), das von einem Motor mit Antriebsbaugruppen des vorderen Bypass-Ventils des Innenkörpers (24) angetrieben wird, der die Steuerung des Luftweges vom Zwischenraum β zum Raum γ ermöglicht,
wobei auf der Oberfläche des Innenkörpers (20) eine Innenkörper-Front-Bypass-Ventil-Dichtung (25) vorhanden ist, die für die geschlossene Stellung des Front-Bypass-Ventils des Innenkörpers (23) eine ordnungsgemäße Druckbeaufschlagung ermöglicht und einen Luftweg von Zwischenraum β nach Raum γ verhindert;
in Strömungsrichtung des Betriebsmediums, vom Primärflügel (3) kommend, befindet sich entlang der axialen Achse der Ventilatoren (1, 22) am Mittelkörper (19) eine hintere Absperrklappe (13), die von einem Motor mit Antriebsaggregaten der hinteren Absperrklappe (14) angetrieben wird und zur Steuerung des Luftweges vom Raum γ zur Atmosphäre dient;
entlang der axialen Achse (O-O) der Ventilatoren (1, 22) hinter dem hinteren Verschlussventil (13) ist der Steuerflügel (7) für die Wechselwirkung mit dem Betriebsmedium, das aus dem Innenraum γ nach außen zur Atmosphäre strömt, in einer blütenblattartigen Form mit ringförmigen Drehmitteln (8) des Steuerflügels (7) für die ringförmige Drehung um eine axiale Achse (O-O) der Vorrichtung, die mit einem Motor mit Antriebsbaugruppen (9) der ringförmigen Drehmittel des Steuerflügels und Stützmitteln (10) des Steuerflügels (7) versehen ist, hergestellt;
entlang der axialen Achse der Ventilatoren (1, 22) im Zwischenraum α ein vorderes Bypass-Ventil des Mittelkörpers (26) vorhanden ist, das von einem Motor mit Antriebsbaugruppen (27) des vorderen Bypass-Ventils des Mittelkörpers angetrieben wird und dazu dient, den Luftstrom von der Außenatmosphäre zu den Räumen α und γ nacheinander zu steuern;
In den Zwischenräumen des Geräts befinden sich Einrichtungen des Kondensatsammel- und -ablasssystems (11), das mit einer Ablasspumpe mit Ablassrohr (12) versehen ist;
im unteren Teil des Außenkörpers (17) des Geräts ist ein einziehbares Fahrwerk (31) vorhanden, das mit Fahrwerksmotoren mit Antriebsbaugruppen (32) versehen ist, wobei der untere Teil des Außenkörpers für die eingezogene Fahrwerksposition eine Einbuchtung aufweist, die so gestaltet ist, dass sich das eingezogene Fahrwerk (31) mit Hilfe der Einbuchtung an die Außenkörperstruktur anpasst, wodurch der Luftwiderstand der freien Luft, wenn sie den Außenkörper (17) umströmt, minimiert wird; der mittlere Körper (19) enthält ein Lageorientierungssystem (33) und ein automatisches Steuerungssystem (34).

2. Die aerodynamische Vorrichtung nach Anspruch 1
**gekennzeichnet durch**
dass ein Verhältnis eines Innenflächenradius R₁ des Außenkörpers (17) zu einem Innenflächenradius R₂ des Mittelkörpers (19) im Bereich von 1,06 < R₁/R₂< 1,65 liegt; während das Verhältnis des Innenflächenradius R₂ des Mittelkörpers (19) zu einem Innenflächenradius R₃ des Innenkörpers (20) im Bereich von 1.03 < R₂/R₃ <1,55; für die Sehnen, die auf den entsprechenden Symmetrieebenen der Flügel (3, 7) liegen und die maximalen Abmessungen haben, liegt das Verhältnis zwischen der maximalen Abmessung der Sehne B₁ des Hauptflügels (3) und der maximalen Abmessung der Sehne B₂ des Steuerflügels (7) im Bereich von 0,59 < B₁/B₂< 18,5.

## Revendications

1. Dispositif aérodynamique contenant un corps extérieur (17) qui est en mesure de déplacer un fluide de fonctionnement gazeux par exemple l'air et d'utiliser des forces de réaction du fluide de fonctionnement gazeux à dessin de plusieurs manouvres ; Avec des ventilateurs présentent un premier et un deuxième moteur d'entraînement (1,22),; un battant primaire (3) et un battant de porte (7) ;
Un système pour la régulation de la température du fluide de fonctionnement gazeux (28,29,30) ; une unité de communication externe (13,14,15,16,23,24,26,27) avec des ouvertures dans le corps extérieur (17) où les fonctions de l'unité de communication externe sont exécutées grâce à des ventilateurs correspondants (13, 15, 23, 26) ; Est caractérisé de sorte que
Le corps extérieur (17) du dispositif est sphérique;
Un corps centrale sphérique (19) se situe à l'intérieur du corps extérieur (17) qui est relié avec des moyens de fixation (18) à titre rigide au corps extérieur (17) où un espace α subsiste entre ces corps (17, 19) ;
Un corps intérieur sphérique (20) se trouve à l'intérieur du corps central (19) qui est relié avec des moyens de fixation (21) à titre rigide au corps centrale (19), avec un espace β entre le corps central (19) et le corps intérieur (20) et avec un espace γ à l'intérieure du corps interne (20) ;
Dans l'espace γ se trouve le ventilateur principale avec le premier moteur d'entraînement (1) qui est relié par le biais d'un moyen de support (2) du ventilateur principale à titre rigide au corps intérieure (20),
avec le battant primaire (3) qui est produit dans une forme de pétale avec des pivotements annulaires (4) qui sont munies d'un moteur (5) γ compris de groupes d'entraînement de pivotements annuaires (4) pour la rotation annuaire du battant primaire (3) autour d'un axe centrale (O-O) du dispositif et avec des moyens de support (6) du battant primaire (3);
Sur la surface du corps intérieure (20) sur un côté d'un bord de fuite du battant primaire (3) se trouve une ouverture reliant les espaces γ et β pour le fluide de fonctionnement qui est réglé par le biais d'un ventilateur de pontage arrière (15) du corps central (19) où le ventilateur de pontage (15) est commandé par un moteur (16) avec des groupes d'entraînement du ventilateur de pontage arrière du corps central; L'appareil est équipé du système pour le commandement de la température du fluide de fonctionnement (28, 29, 30) présentant l'agencement suivant de ses unités principales :
- un dispositif de refroidissement avec
- un compresseur (28) monté à titre rigide dans l'espace α,
- un évaporateur (29) avec une vanne papillon montée à titre rigide dans l'espace β
et
- un radiateur-condensateur (30) qui est placé à titre rigide à l'hémisphère arrière extérieur du corps extérieur (17) ;
Au long de l'axe axial du ventilateur principale avec un premier moteur d'entraînement (1) sur le corps médiale 19) se trouve le ventilateur périphérique pour diriger le fluide de fonctionnement au ventilateur principale où le deuxième moteur d'entraînement (22) est monté fixement en alignement coaxial;
Dans l'espace β de l'axe axiale (O-O) du ventilateur principale avec le premier moteur d'entraînement (1) se trouve un ventilateur de pontage avant du corps interne (23) qui est commandé par un moteur avec des groupes d'entraînement du ventilateur de pontage avant du corps interne (24) qui rend possible la commande de la voie d'air de l'espace β vers l'espace y où sur la surface du corps interne (20) une garniture d'étanchéité du ventilateur de pontage du corps interne frontalier (25) est disponible qui rend possible la position fermée du ventilateur de pontage frontalier du corps interne (23) et une pressurisation en bonne et du forme et obstrue la voie d'air entre l'espace β et l'espace y;
Au sens d'écoulement du fluide de fonctionnement, venant du battant primaire (3), se trouve au long de l'axe axiale des ventilateurs (1,22) au corps central (19) une vanne papillon (13) qui est commandée par le biais d'un moteur des modules d'entraînement de la vanne papillon arrière (14) et qui sert pour le contrôle de la voie d'air de l'espace y vers l'atmosphère ;
Au long de l'axe axiale (O-O) des ventilateurs (1,22) derrière la soupape de fermeture arrière (13) est le battant de porte (7) pour l'interaction avec le fluide de fonctionnement qui coule de l'espace intérieure y vers l'extérieur vers l'atmosphère en forme pétale avec des pivotements annuaires (8) du battant de porte (7) pour la rotation annuaire autour d'un axe axiale (O-O) du dispositif produit muni d'un moteur avec des groupes d'entraînement (9) des pivotements annuaires du battant de porte et des moyens de support (10) du battant de porte (7) ;
Au long de l'axe axial des ventilateurs (1,22) dans l'espace α un ventilateur de pontage avant du corps central (26) est disponible qui est commandé par le biais d'un moteur avec des groupes d'entraînement (27) du ventilateur de pontage avant du corps central et sert de guider successivement le courant d'air de l'atmosphère extérieure vers les espaces α et γ;
Dans les espaces de l'appareil se trouvent des installations de système de condensation et de déchargement (11) qui est muni d'une pompe de vidange avec un tube de drainage (12) ;
Dans la partie inférieure du corps extérieur (17) de l'appareil il ya un châssis rétractable (31) qui est muni de moteurs de train de roulement avec des groupes d'entraînement (32) où la partie inférieure du corps extérieur présente un renfoncement pour la position de châssis rétractable qui est formé de sorte que le châssis (31) rétractable s'adapte à l'aide du renfoncement à la structure du corps extérieur par le biais duquel la résistance de l'air de l'air libre se minimise si il coule autour du corps extérieur (17);
Le corps central (19) contient un système d'orientation de l'emplacement (33) et un système de guidage automatique (34).

2. Le dispositif aérodynamique selon la revendication 1 est caractérisé de sorte qu'un rapport du rayon de la surface intérieure R₁ du corps extérieure (17) vers le rayon de surface interne R₂ du corps central (19) se situe dans la plage de 1,06 < R₁/R₂< 1,65, tandis que le rapport du rayon de la surface intérieure R₂ du corps central vers le rayon de la surface intérieure R₃ du corps intérieure (20) se situe dans la plage de 1.03 < R₂/R₃ <1,55; Pour les tendons se situant sur les plans symétriques correspondant des battants (3, 7) et qui présentent les dimensions maximales, le rapport entre la dimension maximale du tendon B₁ du battant principal (3) et de la dimension maximale du tendon B₂ du battant de porte (7) se situe dans la plage de 0,59 < B₁/B₂< 18,5.
